# EUROPEAN PATENT APPLICATION

(11) **EP 3 909 543 A1**
(43) Date of publication of application: **17.11.2021**
(21) Application number: 20887043.6
(22) Date of filing: 28.08.2020
(51) Int. Cl.: A61C 3/025

(54) **ROTATABLE SUBGINGIVAL SPRAYER NOZZLE OF DENTAL SANDBLASTING MACHINE**

(30) Priority: 13.11.2019 CN 201921955309 U
(71) Applicant: Guilin Woodpecker Medical Instrument Co., Ltd., Guilin, Guangxi 541004 (CN)
(72) Inventor: TANG, Peng, Guilin, Guangxi 541004 (CN); LIU, Tao, Guilin, Guangxi 541004 (CN); WEI, Kunsong, Guilin, Guangxi 541004 (CN)
(74) Representative: Sun, Yiming
(86) International application number: PCT/CN2020/111941
(87) International publication number: WO 2021/093415

(57) **Abstract**

Provided is a rotatable subgingival sprayer nozzle of a dental sandblasting machine, which includes a nozzle (6), a sprayer elbow (5) and a sprayer body (4). The nozzle (6) includes a nozzle body (61) and a nozzle locking cap (9) that are rotatably connected to each other. The nozzle (6) is detachably connected to the sprayer elbow (5). The sprayer body (4) is fixedly connected to the sprayer elbow (5). The nozzle body (61) is a plastic part and disposable. The nozzle (6) is provided with a second groove (8), a fourth air pipe (62) and a fourth water pipe (63). The sprayer elbow (5) is provided with a first groove (7), a third air pipe (52) and a third water pipe (53). The third air pipe (52) passes through an end of the first groove (7) and is interference fitted with the fourth air pipe (62). The third water pipe (53) and the fourth water pipe (63) are connected via the first groove (7) and the second groove (8). Thus, slits between teeth and dead corners of periodontal pockets can be conveniently cleaned by rotating the direction of the nozzle (6), thereby facilitating all-around treatment.

## Description

### TECHNICAL FIELD

The present utility model relates to the field of treatment and prevention technologies of dental diseases, and in particular to a rotatable subgingival sprayer nozzle of a dental sandblasting machine.

### BACKGROUND

At present, sand powder for treatment is generally sprayed by compressed gas (generally air) onto the surfaces of teeth and further merged with a liquid medium (generally water) as sprayed at the same time to clean the surfaces of the teeth and the subgingival periodontal pockets. Thus, a handle and a sprayer for spraying an air-sand mixture and water are required to achieve the above teeth cleaning effect. In addition, since the sand powder as adopted is generally water-soluble, an air path (containing the sand powder) and a water path shall be strictly separated from each other to prevent the occurrence of clogging, and can only be merged on the surfaces of the teeth until the sand powder is ejected from the nozzle of the sprayer. However, after the existing subgingival sandblasting sprayer is assembled, the water path and the air path are parallel, but the direction of the nozzle cannot be rotated, which makes it impossible to conveniently clean slits between the teeth and dead corners of periodontal pockets, and is therefore not conducive to all-round treatment.

### SUMMARY

An objective of the present utility model is to provide a rotatable subgingival sprayer nozzle of a dental sandblasting machine, which can facilitate cleaning and treatment of slits between teeth and dead corners of periodontal pockets by rotating the direction of the nozzle and is therefore conducive to all-round treatment.

In order to achieve the objective, the present utility model provides a rotatable subgingival sprayer nozzle of a dental sandblasting machine. The rotatable subgingival sprayer nozzle of a dental sandblasting machine includes a nozzle, a sprayer elbow and a sprayer body, wherein the nozzle includes a nozzle locking cap and a nozzle body that is a plastic part and disposable, with the nozzle body being rotatably connected to the nozzle locking cap and disposed at a side of the nozzle locking cap; the sprayer elbow is detachably connected to the nozzle and disposed at a side distal from the nozzle body; the sprayer body is fixedly connected to the sprayer elbow and disposed at a side distal from the nozzle; the nozzle is provided with a second groove, a fourth air pipe and a fourth water pipe, wherein the second groove is disposed at a side proximate to the nozzle locking cap, the fourth air pipe is disposed at a center of the nozzle, and the fourth water pipe passes through the nozzle and is disposed at a side distal from the fourth air pipe; thesprayer elbow is provided with a first groove, a third air pipe and a third water pipe, wherein the first groove is disposed at a side proximate to the nozzle, the third air pipe passes through the sprayer elbow and is disposed at a center of the sprayer elbow, and the third water pipe is disposed at a side distal from the third air pipe, and wherein the third air pipe passes through an end of the first groove and is interference fitted with the fourth air pipe, and the third water pipe and the fourth water pipe are connected via the first groove and the second groove.

The nozzle body is further provided with an air outlet at a side distal from the nozzle locking cap.

The sprayer elbow includes an elbow body that is rotatably connected to the nozzle locking cap and disposed at a side distal from the air outlet.

The sprayer body includes an outer pipe fitting and an inner pipe fitting, wherein the outer pipe fitting is fixedly connected to the sprayer elbow and disposed at a side distal from the nozzle, and the inner pipe fitting is fixedly connected to the sprayer elbow and disposed in the outer pipe fitting.

The sprayer body further includes a second air pipe and a second water pipe. The second air pipe and the second water pipe pass through the sprayer body and are fixedly connected to the sprayer body; the second air pipe is non-detachably connected to the third air pipe, and disposed between the inner pipe fitting and the outer pipe fitting and at a center of the sprayer body; and the second water pipe is non-detachably connected to the third water pipe and disposed at a side distal from the inner pipe fitting.

The sprayer body further includes a connector that is fixedly connected to the outer pipe fitting and disposed at a side distal from the sprayer elbow.

The rotatable subgingival sprayer nozzle of a dental sandblasting machine further includes a handle that is rotatably and detachably connected to the connector and disposed at a side distal from the outer pipe fitting.

The handle includes a connection sleeve, a handle housing and a handle guide sleeve. The connection sleeve is detachably connected to the connector and disposed at a side distal from the sprayer body; the handle housing is rotatably and detachably connected to the connector and disposed around the connection sleeve; and the handle guide sleeve is fixedly connected to the handle housing and disposed at a side distal from the connection sleeve.

The handle further includes a first air pipe and a first water pipe. The first air pipe and the first water pipe pass through the handle and are fixedly connected to the handle and a tail wire; the first air pipe is fixedly connected to the second air pipe and disposed at a center of the handle; and the first water pipe is fixedly connected to the second water pipe and disposed at a side proximate to the handle housing.

The present utility model provides a rotatable subgingival sprayer nozzle of a dental sandblasting machine. The rotatable subgingival sprayer nozzle of a dental sandblasting machine includes a nozzle, a sprayer elbow and a sprayer body, wherein the nozzle includes a nozzle locking cap and a nozzle body that is a plastic part and disposable, with the nozzle body being rotatably connected to the nozzle locking cap and disposed at a side of the nozzle locking cap; the sprayer elbow is detachably connected to the nozzle and disposed at a side distal from the nozzle body, and the sprayer body is fixedly connected to the sprayer elbow and disposed at a side distal from the nozzle; the nozzle is provided with a second groove, a fourth air pipe and a fourth water pipe, wherein the second groove is disposed at a side proximate to the nozzle locking cap, the fourth air pipe is disposed at a center of the nozzle, and the fourth water pipe passes through the nozzle and is disposed at a side distal from the fourth air pipe; the sprayer elbow is provided with a first groove, a third air pipe and a third water pipe, wherein the first groove is disposed at a side proximate to the nozzle, the third air pipe passes through the sprayer elbow and is disposed at a center of the sprayer elbow, and the third water pipe is disposed at a side distal from the third air pipe, and wherein the third air pipe passes through an end of the first groove and is interference fitted with the fourth air pipe, and the third water pipe and the fourth water pipe are connected via the first groove and the second groove. which facilitates cleaning and treatment of slits between teeth and dead corners of periodontal pockets by rotating the direction of the nozzle, and is therefore conducive to all-round treatment.

### BRIEF DESCRIPTION OF THE DRAWINGS

To describe the technical solutions in the embodiments of the present utility model or the prior art more clearly, the following briefly introduces the accompanying drawings required for describing the embodiments. Apparently, the accompanying drawings in the following description show merely some embodiments of the present utility model, and a person of ordinary skill in the art may still derive other drawings from these accompanying drawings without creative efforts.
FIG. 1 is a schematic structural diagram of a sprayer according to the present utility model;
FIG. 2 is a schematic structural diagram of a handle and a sprayer according to the present utility model;
FIG. 3 is a sectional view of a handle and a sprayer according to the present utility model;
FIG. 4 is a schematic diagram of initial installation of a sprayer according to the present utility model;
FIG. 5 is a schematic diagram of installation of a sprayer according to the present utility model after FIG. 4 is rotated by 90° clockwise; and
FIG. 6 is a schematic diagram of installation of a sprayer according to the present utility model after FIG. 4 is rotated by 90° counterclockwise.

Reference signs: 1 Handle; 4 Sprayer body; 5 Sprayer elbow; 6 Nozzle, 7 First groove; 8 Second groove; 9 Nozzle locking cap; 11-Handle guide sleeve; 12 Handle housing; 13 Connection sleeve; 14 First air pipe; 15 First water pipe; 41 Outer pipe fitting; 42 Inner pipe fitting; 43 Second air pipe; 44 Second water pipe; 45 Connector; 51 Elbow body; 52 Third air pipe; 53 Third water pipe; 61 Nozzle body; 62 Fourth air pipe; 63 Fourth water pipe; 64 Air outlet.

### DETAILED DESCRIPTION

Embodiments of the present utility model will be described in detail hereinafter. Examples of the embodiments are shown in the accompanying drawings, in which the same or similar reference signs indicate the same or similar elements or elements having the same or similar functions. The embodiments described below with reference to the accompanying drawings are exemplary, and are intended to explain the present utility model and shall not be understood as a limitation to the present utility model.

In the description of the present utility model, it should be understood that, orientations or position relationships indicated by the terms "length", "width", "up", "down", "front", "back", "left", "right", "vertical", "horizontal", "top", "bottom", "inner", "outer", etc. are based on the orientations or position relationships as shown in the drawings, for ease of the description of the present utility model and simplifying the description only, rather than indicating or implying that the indicated device or element must have a particular orientation or be constructed and operated in a particular orientation. Therefore, these terms should not be understood as a limitation to the present utility model. The expression "fixedly connected" is defined relative to the assembling and using process. During the assembling, scattered parts are assembled and fixedly connected via the fixing pieces, such that they are fixed during the using process. When disassembly is required, the fixing pieces may be removed to realize the disassembly. Furthermore, in the description of the present utility model, "a plurality of" refers to two or more in number, unless otherwise specifically defined.

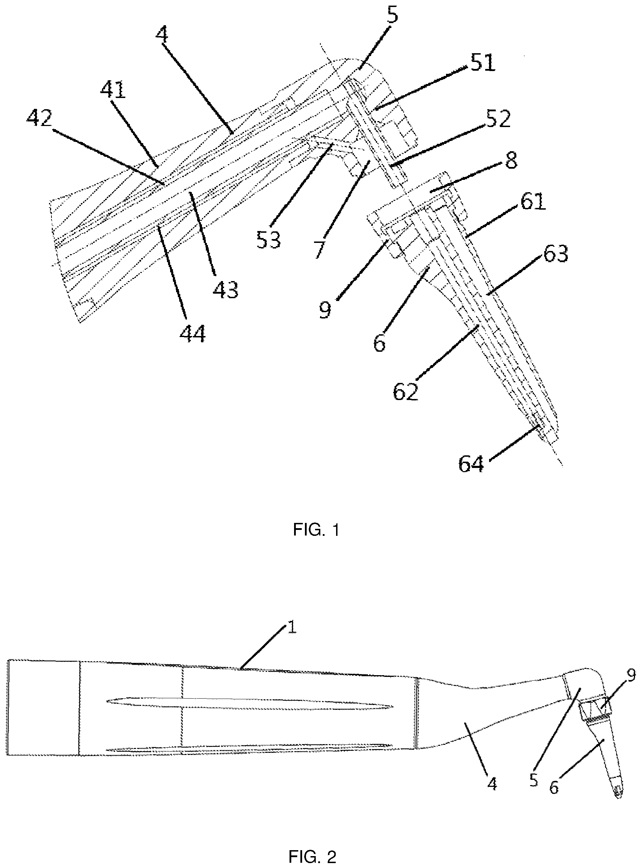

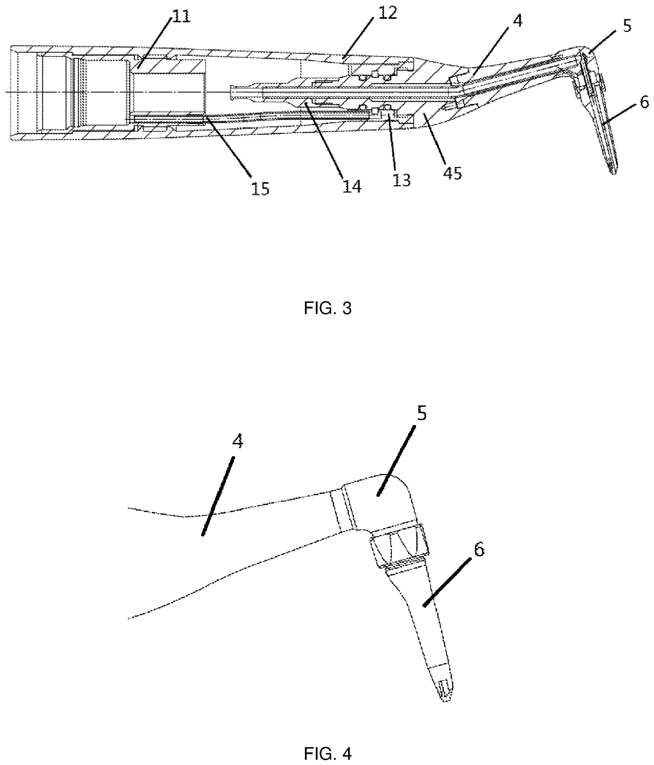

Referring to FIGS. 1 and 3, the present utility model provides a rotatable subgingival sprayer nozzle of a dental sandblasting machine. The rotatable subgingival sprayer nozzle of a dental sandblasting machine includes a nozzle 6, a sprayer elbow 5 and a sprayer body 4. The nozzle 6 includes a nozzle locking cap 9 and a nozzle body 61 that is a plastic part and disposable. The nozzle body 61 is rotatably connected to the nozzle locking cap 9 and disposed at a side of the nozzle locking cap 9. The sprayer elbow 5 is detachably connected to the nozzle 6 and disposed at a side distal from the nozzle body 61. The sprayer body 4 is fixedly connected to the sprayer elbow 5 and disposed at a side distal from the nozzle 6. The nozzle 6 is provided with a second groove 8, a fourth air pipe 62 and a fourth water pipe 63. The second groove 8 is disposed at a side proximate to the nozzle locking cap 9. The fourth air pipe 62 is disposed at a center of the nozzle 6. The fourth water pipe 63 passes through the nozzle 6 and is disposed at a side distal from the fourth air pipe 62. The sprayer elbow 5 is provided with a first groove 7, a third air pipe 52 and a third water pipe 53. The first groove 7 is disposed at a side proximate to the nozzle 6. The third air pipe 52 passes through the sprayer elbow 5 and is disposed at a center of the sprayer elbow 5. The third water pipe 53 is disposed at a side distal from the third air pipe 52. The third air pipe 52 passes through an end of the first groove 7 and is interference fitted with the fourth air pipe 62. The third water pipe 53 and the fourth water pipe 63 are connected via the first groove 7 and the second groove 8.

In this embodiment, the rotatable subgingival sprayer nozzle of a dental sandblasting machine includes a nozzle 6, a sprayer elbow 5 and a sprayer body 4. The nozzle 6 includes a nozzle body 61 and a nozzle locking cap 9. The nozzle body 61 is rotatably connected to the nozzle locking cap 9 and disposed at a side of the nozzle locking cap 9. The sprayer elbow 5 is detachably connected to the nozzle 6 and disposed at a side distal from the nozzle body 61. The sprayer body 4 is fixedly connected to the sprayer elbow 5 and disposed at a side distal from the nozzle 6. The nozzle 6 is a plastic part. The sprayer elbow 5 and the nozzle locking cap 9 are metal parts. The nozzle 6 is provided with a second groove 8, a fourth air pipe 62 and a fourth water pipe 63. The second groove 8 is disposed at a side proximate to the nozzle locking cap 9. The fourth air pipe 62 is disposed at a center of the nozzle 6. The fourth water pipe 63 passes through the nozzle 6 and is disposed at a side distal from the fourth air pipe 62. The sprayer elbow 5 is provided with a first groove 7, a third air pipe 52 and a third water pipe 53. The first groove 7 is disposed at a side proximate to the nozzle 6. The third air pipe 52 passes through the sprayer elbow 5 and is disposed at a center of the sprayer elbow 5. The third water pipe 53 is disposed at a side distal from the third air pipe 52. The third air pipe 52 passes through an end of the first groove 7 and is interference fitted with the fourth air pipe 62 to ensure the sealing of the air path. The third water pipe 53 and the fourth water pipe 63 are connected via the first groove 7 and the second groove 8. By means of the nozzle locking cap 9, the nozzle 6 may be freely rotated before the nozzle locking cap 9 is tightened before or after the nozzle 6 is assembled to the sprayer elbow 5, such that the nozzle locking cap 9 may be tightened after the nozzle is rotated to an arbitrary angle to seal the water path and the air path. An included angle of the sprayer elbow 5 generally ranges from 0° to 90°. The nozzle body 61 is a plastic part and disposable to ensure the cleanness and safety of the device. Moreover, the nozzle 6 is of a truncated cone shape, and an end distal from the nozzle locking cap 9 has a smaller size than an end connected to the nozzle locking cap 9 to facilitate holding and operation. In this way, slits between teeth and dead corners of periodontal pockets can be cleaned and treated conveniently by rotating the direction of the nozzle 6, which is conducive to all-around treatment.

Furthermore, the nozzle body 61 is further provided with an air outlet 64 at a side distal from the nozzle locking cap 9.

In this embodiment, the nozzle body 61 is further provided with an air outlet 64 at a side distal from the nozzle locking cap 9. The air outlet 64 is connected to the fourth air pipe 62 for outputting mixed gases in the air pipe.

Furthermore, the sprayer elbow 5 includes an elbow body 51 that is rotatably connected to the nozzle locking cap 9 and disposed at a side distal from the air outlet 64.

In this embodiment, the sprayer elbow 5 includes an elbow body 51 that is rotatably connected to the nozzle locking cap 9 and disposed at a side distal from the air outlet 64. An included angle of the nozzle elbow 5 ranges from 0° to 90° to facilitate cleaning slits between teeth and dead corners of periodontal pockets.

Furthermore, the sprayer body 4 includes an outer pipe fitting 41 and an inner pipe fitting 42. The outer pipe fitting 41 is fixedly connected to the sprayer elbow 5 and disposed at a side distal from the nozzle 6. The inner pipe fitting 42 is fixedly connected to the sprayer elbow 5 and disposed in the outer pipe fitting 41.

In this embodiment, the sprayer body 4 includes an outer pipe fitting 41 and an inner pipe fitting 42. The outer pipe fitting 41 is fixedly connected to the sprayer elbow 5 and disposed at a side distal from the nozzle 6. The inner pipe fitting 42 is fixedly connected to the sprayer elbow 5 and disposed in the outer pipe fitting 41. A certain gap exists between the outer pipe fitting 41 and the inner pipe fitting 42 for providing the water pipe and the air pipe.

Furthermore, the sprayer body 4 further includes a second air pipe 43 and a second water pipe 44. The second air pipe 43 and the second water pipe 44 pass through the sprayer body 4 and are fixedly connected to the sprayer body 4. The second air pipe 43 is non-detachably connected to the third air pipe 52, and disposed between the inner pipe fitting 42 and the outer pipe fitting 41 and at a center of the sprayer body 4. The second water pipe 44 is non-detachably connected to the third water pipe 53 and disposed at a side distal from the inner pipe fitting 42.

In this embodiment, the sprayer body 4 further includes a second air pipe 43 and a second water pipe 44. The second air pipe 43 and the second water pipe 44 pass through the sprayer body 4 and are fixedly connected to the sprayer body 4. The second air pipe 43 is non-detachably connected to the third air pipe 52 and, and disposed between the inner pipe fitting 43 and the outer pipe fitting 41 and at a center of the sprayer body 4. The second water pipe 44 is non-detachably connected to the third water pipe 53 and disposed at a side distal from the inner pipe fitting 42. The gap between the second water pipe 44 and the second air pipe 43 is small, and the second water pipe 44 and the second air pipe 43 are arranged in parallel to reduce the size of the sprayer body 4, facilitating holding and operation.

Furthermore, the sprayer body 4 further includes a connector 45 that is fixedly connected to the outer pipe fitting 41 and disposed at a side distal from the sprayer elbow 5.

In this embodiment, the sprayer body 4 further includes a connector 45 that is fixedly connected to the outer pipe fitting 41 and disposed at a side distal from the sprayer elbow 5. The connector 45 is of a detachable connection structure, and can connect the entire sprayer detachably to the sandblasting machine.

Furthermore, the rotatable subgingival sprayer nozzle of a dental sandblasting machine further includes a handle 1 that is rotatably and detachably connected to the connector 45 and disposed at a side distal from the outer pipe fitting 41.

In this embodiment, the rotatable subgingival sprayer nozzle of a dental sandblasting machine further includes a handle 1 that is rotatably and detachably connected to the connector 45 and disposed at a side distal from the outer pipe fitting 41. The handle 1 is of a cylindrical shape to facilitate holding and operation, and is rotatably and detachably connected to the connector 45, such that the entire sprayer can be detached from the handle 1.

Furthermore, the handle 1 includes a connection sleeve 13, a handle housing 12 and a handle guide sleeve 11. The connection sleeve 13 is detachably connected to the connector 45 and disposed at a side distal from the sprayer body 4. The handle housing 12 is rotatably and detachably connected to the connector 45 and disposed around the connection sleeve 13. The handle guide sleeve 11 is fixedly connected to the handle housing 12 and disposed at a side distal from the connection sleeve 13.

In this embodiment, the handle 1 includes a connection sleeve 13, a handle housing 12 and a handle guide sleeve 11. The connection sleeve 13 is detachably connected to the connector 45 and disposed at a side distal from the sprayer body 4. The handle housing 12 is rotatably and detachably connected to the connector 45 and disposed around the connection sleeve 13. The handle guide sleeve 11 is fixedly connected to the handle housing 12 and disposed at a side distal from the connection sleeve 13. The handle housing 12 is buckled and fixed with the handle guide sleeve 11, and is of a cylindrical shape. The connection sleeve 13 is detachably connected to the sprayer body 4, and has a sealing function to prevent the dust or the leakage of the liquid and mixture in a tail wire.

Furthermore, the handle 1 further includes a first air pipe 14 and a first water pipe 15. The first air pipe 14 and the first water pipe 15 pass through the handle 1 and are fixedly connected to the handle 1. The first air pipe 14 is fixedly connected to the second air pipe 43 and disposed at a center of the handle 1. The first water pipe 15 is fixedly connected to the second water pipe 44 and disposed at a side proximate to the handle housing 12.

In this embodiment, the handle 1 further includes a first air pipe 14 and a first water pipe 15. The first air pipe 14 and the first water pipe 15 pass through the handle 1 and are fixedly connected to the handle 1. The first air pipe 14 is fixedly connected to the second air pipe 43 and disposed at a center of the handle 1. The first water pipe 15 is fixedly connected to the second water pipe 44 and disposed at a side proximate to the handle housing 12. A liquid (generally water) and a mixture of compressed gas (air) and sand powder (sodium bicarbonate/glycine powder and the like) are supplied to the first air pipe 14 and the first water pipe 15 respectively via a tail wire. The first air pipe 14 and the first water pipe 15 are independent of each other, which prevents the liquid and the mixture from mixing and clogging the pipe.

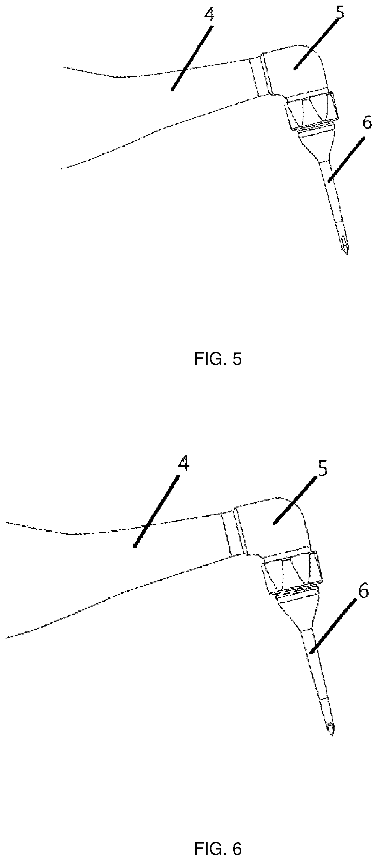

FIG. 4 shows an initial installation direction of the nozzle 6. FIG. 5 shows an installation effect as achieved after the nozzle 6 is rotated by 90° clockwise in the initial direction. FIG. 6 shows an installation effect as achieved after the nozzle 6 is rotated by 90° counterclockwise in the initial direction. The rotation of the nozzle 6 shall be performed before the nozzle locking cap 9 is tightened, and after the nozzle 6 is rotated by a required angle, the nozzle locking cap 9 is tightened to seal the water path and the air path.

The present utility model provides a rotatable subgingival sprayer nozzle of a dental sandblasting machine. The rotatable subgingival sprayer nozzle of a dental sandblasting machine includes a nozzle 6, a sprayer elbow 5 and a sprayer body 4. The nozzle 6 includes a nozzle locking cap 9 and a nozzle body 61 that is a plastic part and disposable. The nozzle body 61 is rotatably connected to the nozzle locking cap 9 and disposed at a side of the nozzle locking cap 9. The sprayer elbow 5 is detachably connected to the nozzle 6 and disposed at a side distal from the nozzle body 61. The sprayer body 4 is fixedly connected to the sprayer elbow 5 and disposed at a side distal from the nozzle 6. The nozzle 6 is provided with a second groove 8, a fourth air pipe 62 and a fourth water pipe 63. The second groove 8 is disposed at a side proximate to the nozzle locking cap 9. The fourth air pipe 62 is disposed at a center of the nozzle 6. The fourth water pipe 63 passes through the nozzle 6 and is disposed at a side distal from the fourth air pipe 62. The sprayer elbow 5 is provided with a first groove 7, a third air pipe 52 and a third water pipe 53. The first groove 7 is disposed at a side proximate to the nozzle 6. The third air pipe 52 passes through the sprayer elbow 5 and is disposed at a center of the sprayer elbow 5. The third water pipe 53 is disposed at a side distal from the third air pipe 52. The third air pipe 52 passes through an end of the first groove 7 and is interference fitted with the fourth air pipe 62. The third water pipe 53 and the fourth water pipe 63 are connected via the first groove 7 and the second groove 8. Thus, the nozzle 6 can be rotated before the nozzle locking cap 9 is tightened, and the nozzle locking cap 9 can be tightened after the nozzle has been rotated by a required angle to seal the water path and the air path, which facilitates cleaning and treatment of slits between teeth and dead corners of periodontal pockets, and is therefore conducive to all-round treatment.

Described above is merely a preferred embodiment of the present utility model, and of course cannot limit the scope of rights of the present utility model. Those of ordinary skill in the art can understand that all or part of the procedures for implementing the embodiments and equivalent changes made in accordance with the claims of the present utility model still fall within the scope of the present utility model.

## Claims

1. A rotatable subgingival sprayer nozzle of a dental sandblasting machine, comprising: a nozzle, a sprayer elbow and a sprayer body, wherein the nozzle comprises a nozzle locking cap and a nozzle body that is a plastic part and disposable, with the nozzle body being rotatably connected to the nozzle locking cap and disposed at a side of the nozzle locking cap; the sprayer elbow is detachably connected to the nozzle and disposed at a side distal from the nozzle body; the sprayer body is fixedly connected to the sprayer elbow and disposed at a side distal from the nozzle; the nozzle is provided with a second groove, a fourth air pipe and a fourth water pipe, wherein the second groove is disposed at a side proximate to the nozzle locking cap, the fourth air pipe is disposed at a center of the nozzle, and the fourth water pipe passes through the nozzle and is disposed at a side distal from the fourth air pipe; the sprayer elbow is provided with a first groove, a third air pipe and a third water pipe, wherein the first groove is disposed at a side proximate to the nozzle, the third air pipe passes through the sprayer elbow and is disposed at a center of the sprayer elbow, and the third water pipe is disposed at a side distal from the third air pipe, and wherein the third air pipe passes through an end of the first groove and is interference fitted with the fourth air pipe, and the third water pipe and the fourth water pipe are connected via the first groove and the second groove.

2. The rotatable subgingival sprayer nozzle of a dental sandblasting machine according to claim 1, wherein the nozzle body is further provided with an air outlet at a side distal from the nozzle locking cap.

3. The rotatable subgingival sprayer nozzle of a dental sandblasting machine according to claim 2, wherein the sprayer elbow comprises an elbow body that is rotatably connected to the nozzle locking cap and disposed at a side distal from the air outlet.

4. The rotatable subgingival sprayer nozzle of a dental sandblasting machine according to claim 3, wherein the sprayer body comprises an outer pipe fitting and an inner pipe fitting, and wherein the outer pipe fitting is fixedly connected to the sprayer elbow and disposed at a side distal from the nozzle, and the inner pipe fitting is fixedly connected to the sprayer elbow and disposed in the outer pipe fitting.

5. The rotatable subgingival sprayer nozzle of a dental sandblasting machine according to claim 4, wherein the sprayer body further comprises a second air pipe and a second water pipe, and wherein the second air pipe and the second water pipe pass through the sprayer body and are fixedly connected to the sprayer body; the second air pipe is non-detachably connected to the third air pipe, and disposed between the inner pipe fitting and the outer pipe fitting and at a center of the sprayer body; and the second water pipe is non-detachably connected to the third water pipe and disposed at a side distal from the inner pipe fitting.

6. The rotatable subgingival sprayer nozzle of a dental sandblasting machine according to claim 5, wherein the sprayer body further comprises a connector that is fixedly connected to the outer pipe fitting and disposed at a side distal from the sprayer elbow.

7. The rotatable subgingival sprayer nozzle of a dental sandblasting machine according to claim 6, further comprising a handle, wherein the handle is rotatably and detachably connected to the connector and disposed at a side distal from the outer pipe fitting.

8. The rotatable subgingival sprayer nozzle of a dental sandblasting machine according to claim 7, wherein the handle comprises a connection sleeve, a handle housing and a handle guide sleeve, and wherein the connection sleeve is detachably connected to the connector and disposed at a side distal from the sprayer body; the handle housing is rotatably and detachably connected to the connector and disposed around the connection sleeve; and the handle guide sleeve is fixedly connected to the handle housing and disposed at a side distal from the connection sleeve.

9. The rotatable subgingival sprayer nozzle of a dental sandblasting machine according to claim 8, wherein the handle further comprises a first air pipe and a first water pipe, and wherein the first air pipe and the first water pipe pass through the handle and are fixedly connected to the handle; the first air pipe is fixedly connected to the second air pipe and disposed at a center of the handle; and the first water pipe is fixedly connected to the second water pipe and disposed at a side proximate to the handle housing.
